# EUROPEAN PATENT APPLICATION

(11) **EP 2 320 052 A1**
(43) Date of publication of application: **11.05.2011**
(21) Application number: 09803018.2
(22) Date of filing: 30.07.2009
(51) Int. Cl.: F02D 29/02

(54) **FUEL SAVING DRIVING DIAGNOSTIC EQUIPMENT, IN-VEHICLE SYSTEM, DRIVE CONTROL APPARATUS, AND FUEL SAVING DRIVING DIAGNOSTIC PROGRAM**

(30) Priority: 30.07.2008 JP 2008197015
(71) Applicant: Fujitsu Ten Limited, Hyogo 652-8510 (JP); Toyota Jidosha Kabushiki Kaisha, Toyota-shi, Aichi 471-8571 (JP); Aisin AW Co., Ltd., Fujii-cho Anjo-shi Aichi 444-1192 (JP); Denso Corporation, Kariya-city Aichi 448-8661 (JP)
(72) Inventor: HARUMOTO, Satoshi, Kobe-shi Hyogo 652-8510 (JP); KIYO, Kouei, Kobe-shi Hyogo 652-8510 (JP); TAKEUCHI, Shojiro, Toyota-shi Aichi 471-8571 (JP); MIURA, Naoki, Anjo-shi Aichi 444-1192 (JP); NAKAMURA, Masaki, Anjo-shi Aichi 444-1192 (JP); SUGIURA, Hiroaki, Anjo-shi Aichi 444-1192 (JP); YAMATANI, Yoshio, Anjo-shi Aichi 444-1192 (JP); NONOMURA, Junichi, Anjo-shi Aichi 444-1192 (JP); TAUCHI, Nobutaka, Kariya-shi Aichi 448-8661 (JP)
(74) Representative: Holz, Ulrike
(86) International application number: PCT/JP2009/063569
(87) International publication number: WO 2010/013776

(57) **Abstract**

A fuel-saving driving diagnostic apparatus detects that the vehicle stops based on a vehicle speed indicating a speed of a vehicle, and detects that the vehicle is in an idling state indicating a state in which the vehicle is idled when a number of engine revolutions of the vehicle whose stop is detected is a predetermined threshold or more. The fuel-saving driving diagnostic apparatus determines whether the vehicle in the idling state is in a parking state based on a selection lever and/or a parking brake of the vehicle in the detected idling state. Then the fuel-saving driving diagnostic apparatus diagnoses fuel-saving driving based on an idling parking time for which the parking state of the vehicle is maintained.

## Description

### Field

The present invention relates to a fuel-saving driving diagnostic apparatus that diagnoses fuel-saving driving of a driver of a vehicle, an in-vehicle system, a driving control device, and a fuel-saving driving diagnostic program.

### Background

In recent years, global environmental issues such as measures against global warming have become focused. Carbon dioxide emission caused by the use of fossil fuel such as petroleum has come to an issue. In particular, emissions from gasoline-fueled automobiles and the like have been brought into question.

To address these issues, various electric automobiles have been developed to reduce emissions: for example, solar cars using solar cells as their power source, fuel-cell cars using fuel cells as their power source, hybrid cars using both gasoline and electricity (electric motor) have been developed.

However, the electric automobiles are still far from being widely- use. -Currently, most commonly used cars are conventional, gasoline-fueled cars. Hence, to address the global environmental issues, reduction in emissions of gasoline-fueled cars is necessary. Against such a background, various types of technologies have been disclosed to prompt the driver of the car to reduce emissions.

For example, according to one disclosed technology for prompting the reduction in emissions, the vehicle is determined to be in an idling state when the vehicle is in a parking state continuously for a predetermined period of time or longer (excluding the time during which the vehicle is stopping at a red light) and the number of engine revolutions is equal to or lower than an idling threshold. When determined to be in an idling state, warning is output for the driver (for example, see Patent Document 1).

### Citation List

### Patent Literature

Patent Literature 1: Japanese Patent Application Laid-open No. 2007-326574

### Summary

### Technical Problem

However, above-described conventional technology determines whether the vehicle is in an idling state or not without distinguishing the stop state where the driver has an intention to drive and the stop state where the driver has no intension to drive. Hence, this technology cannot determine in a correct manner whether the idling is a truly unnecessary one or not, and is unable to raise the awareness of the driver of the wasteful fuel consumption caused by the unnecessary idling.

Specifically, when an apparatus as disclosed by the conventional technology is employed as an in vehicule device, it is necessary to determine a fixed time period in advance in order to exclude the time period spent by the vehicle when stopping at a red light. However, the time spent for waiting at the stoplights can frequently vary depending on the amount of traffic and the like. Hence, it is not realistic to set a fixed time period as a waiting time for all the cars. Use of the same waiting time for city with a high amount of traffic and for country with a low amount of traffic would hardly realize a fair standard for the drivers, and cannot judge the idling state in a precise manner.

Further, when the vehicle stops to let a pedestrian cross the road on turning to the left or to the right, the above-described conventional technology regards such waiting time as a time in a stopped state. Hence, the conventional technology tends to count a time period longer than the time period in an actual idling state, whereby the idling state cannot be determined in a precise manner.

In view of the foregoing, an object of the present invention is to provide a fuel-saving driving diagnostic apparatus, an in-vehicle system, a driving control device, and a fuel-saving driving diagnostic program, capable of making the driver realize the wasteful fuel consumption caused by unnecessary idling and raising the awareness of the driver of the fuel-saving driving by determining that the vehicle is in an idling state only when the vehicle is in a stopped state and the driver thereof has no intension to drive.

### Solution to Problem

To solve the problems as described above, and to achieve an object, the invention includes a stop detection unit that detects that a vehicle stops, an idling stop detection unit that detects that the vehicle is in an idling state, which is a state in which the vehicle is idled, when a number of engine revolutions of the vehicle detected by the stop detection unit is a predetermined threshold or more, an idling parking determination unit that determines whether the vehicle in the idling state is in a parking state based on a selection lever or a parking brake of the vehicle in the idling state detected by the idling stop detection unit, and an idling parking time counting unit that counts an idling parking time that is an elapsed time for which the parking state of the vehicle determined by the idling parking determination unit is maintained, wherein fuel-saving driving is diagnosed based on the idling parking time counted by the idling parking time counting unit.

### Advantageous Effects of Invention

According to the invention, only the parked vehicle with no intention to run are determined to be in an idling state. Hence, it is possible to make the driver recognize the wasteful fuel consumption caused by the unnecessary idling, and to raise the awareness of the driver towards fuel-saving driving.

According to the invention, it is possible to determine whether the vehicle is in a stopped state or not in a more precise manner.

According to the invention, it is possible to prompt the driver to do the fuel-saving driving by calculating an average idling time which is easy to understand for the driver.

According to the invention, only the truly unnecessary idling state can be counted, and the idling state can be determined more precisely.

According to the invention, the driver is notified of the advice on the fuel-saving driving, so that the driver can more strongly be encouraged to perform the fuel-saving driving.

According to the invention, notification to the driver can be made by easy-to-understand information to encourage the driver to perform the fuel-saving driving.

According to the invention, the driver who performs the wasteful idling, that is, the driver who emits the gas wastefully can immediately be notified of the advice on the fuel-saving driving.

### Brief Description of Drawings

FIG. 1 is a block diagram illustrating a configuration of an in-vehicle system including a fuel-saving driving diagnostic apparatus according to a first embodiment of the invention.
FIG. 2 is a view illustrating an idling stop state determination condition.
FIG. 3 is a view illustrating an idling parking state determination condition.
FIG. 4 is a view illustrating an idling-left state determination condition.
FIG. 5 is a flowchart illustrating a flowchart of idling parking determination process in the fuel-saving driving diagnostic apparatus of the first embodiment.
FIG. 6 is a flowchart illustrating a flowchart of idling-left determination process in the fuel-saving driving diagnostic apparatus of the first embodiment.
FIG. 7 is a view illustrating an example of the in-vehicle system in which a fuel-saving driving diagnostic function is distributed.

### Description of Embodiments

A fuel-saving driving diagnostic apparatus, an in-vehicle system, a driving control device, and a fuel-saving driving diagnostic program according to an embodiment of the invention will be described in detail below with reference to the accompanying drawings. An outline of a fuel-saving driving diagnostic apparatus according to an embodiment of the invention and a configuration and processing flow of the fuel-saving driving diagnostic apparatus are sequentially described, and various modifications of the embodiment are finally described.

### First Embodiment

### [Outline and Feature of Fuel-saving Driving Diagnostic Apparatus]

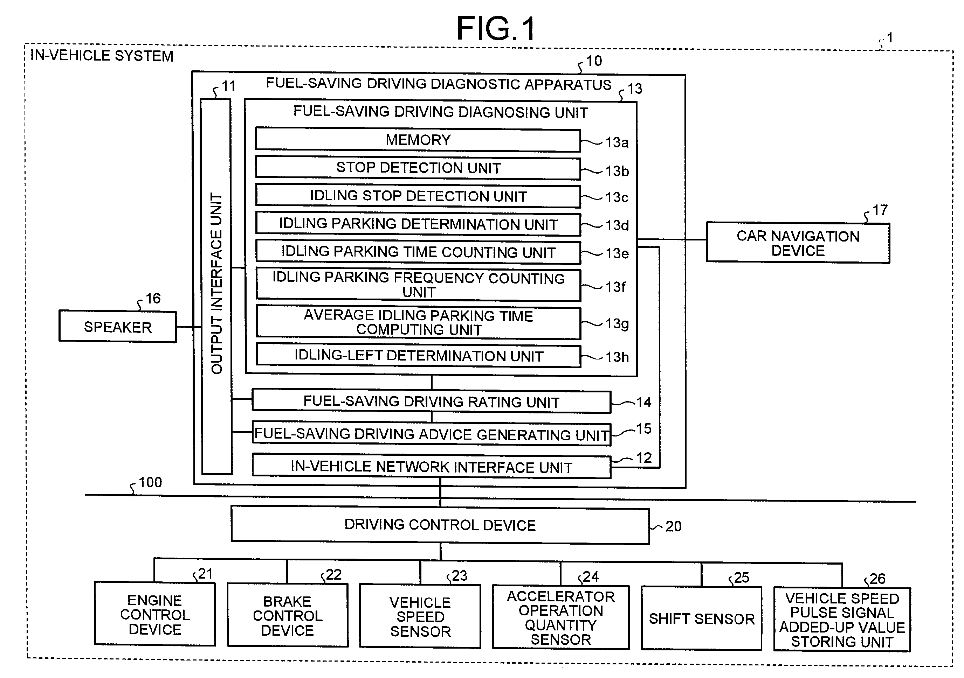

As illustrated in FIG. 1, a fuel-saving driving diagnostic apparatus 10 according to a first embodiment of the invention is an apparatus that is mounted on an in-vehicle system in a vehicle such as an automobile, to diagnose fuel-saving driving of a driver of the vehicle. An in-vehicle system 1 includes the fuel-saving driving diagnostic apparatus 10, a speaker 16 that outputs sound in the vehicle, and a car navigation device 17 that assists driving of the driver, and a driving control device 20 that performs various kinds of control relating to driving of the vehicle. The fuel-saving driving diagnostic apparatus 10, the speaker 16, and the car navigation device 17 are connected to one another. The fuel-saving driving diagnostic apparatus 10 is connected to the driving control device 20 through a bus 100. The fuel-saving driving diagnostic apparatus 10 described herein is illustrated only by way of example. The invention is not limited to the fuel-saving driving diagnostic apparatus 10 illustrated in FIG. 1. For example, the fuel-saving driving diagnostic apparatus may include various devices such as an air conditioner and an air cleaner which are mounted on the automobile.

The fuel-saving driving diagnostic apparatus 10 of the first embodiment detects that the vehicle stops based on a vehicle speed indicating a speed of the vehicle, and the fuel-saving driving diagnostic apparatus 10 detects that the vehicle is in an idling state in which the vehicle is idled when the number of engine revolutions of the vehicle whose stop is detected is a predetermined threshold or more. The fuel-saving driving diagnostic apparatus 10 determines whether the vehicle in the idling state is in a parking state based on a selection lever and/or a parking brake of the vehicle in the detected idling state. As a result, the fuel-saving driving diagnostic apparatus 10 can precisely determine the idling state.

Specifically, the fuel-saving driving diagnostic apparatus 10 of the first embodiment determines that the vehicle in the idling state is in the parking state, when a selection lever of the vehicle that stops in the idling state is located in a "P range", or when the parking brake is located in an "ON" position. That is, the fuel-saving driving diagnostic apparatus 10 determines whether the vehicle in the idling state "intends to run" based on whether the selection lever of the vehicle that stops in the idling state is located in the "P range" or whether the parking brake is located in the "ON" position. The fuel-saving driving diagnostic apparatus 10 determines that the vehicle is idled to wastefully consume fuel, when the vehicle is in the idling state and determined to "have no intension to run", in other words, when the selection lever of the vehicle is located in the "P range" or the parking brake is located in the "ON" position.

If the vehicle which has to stop briefly though the driver thereof has an intension to keep running, for example, the vehicle waiting for the pedestrian to cross the road or trying to turn to the right or to the left is determined to be in the idling state, it is too inconvenient for and disadvantageous to the driver. Hence, the fuel-saving driving diagnostic apparatus 10 of the first embodiment determines the vehicle to be in the idling state only when the vehicle is parked and has no intension to run, for example, when the selection lever thereof is located in the "P range" or when the parking brake is in the "ON" position. Thus the fuel-saving driving diagnostic apparatus 10 can determine the idling state accurately.

### [Configuration of Fuel-Saving Driving Diagnostic Apparatus]

A configuration of the fuel-saving driving diagnostic apparatus of the first embodiment will be described below with reference to FIG. 1. FIG. 1 is a block diagram illustrating the configuration of the in-vehicle system including the fuel-saving driving diagnostic apparatus of the first embodiment.

As illustrated in FIG. 1, the in-vehicle system 1 includes the fuel-saving driving diagnostic apparatus 10, the speaker 16, the car navigation device 17, the driving control device 20, an engine control device 21, a brake control device 22, a vehicle speed sensor 23, an accelerator operation quantity sensor 24, a shift sensor 25, and a vehicle speed pulse signal added-up value storing unit 26.

The speaker 16 outputs various sound signals input from the fuel-saving driving diagnostic apparatus 10 to a vehicle interior in the form of sound, and the speaker 16 outputs various sound signals input from a radio (not illustrated) or a music player (not illustrated) to the vehicle interior in the form of sound. The car navigation device 17 is a general car navigation device that includes a touch panel or a liquid crystal display. The car navigation device 17 displays map information and road information, and outputs information on a road on which the vehicle runs currently from the stored map information and road information to the fuel-saving driving diagnostic apparatus 10.

### (Configuration of Fuel-saving Driving Diagnostic Apparatus 10)

The fuel-saving driving diagnostic apparatus 10 includes an output interface unit 11, an in-vehicle network interface unit 12, a fuel-saving driving diagnosing unit 13, a fuel-saving driving rating unit 14, and a fuel-saving driving advice generating unit 15.

The output interface unit 11 is an interface that controls communication of various pieces of information conducted between the fuel-saving driving diagnostic apparatus 10 and the speaker 16. For example, the output interface unit 11 receives a result of fuel-saving driving diagnosis of the driver which is output from the fuel-saving driving diagnosing unit 13, a fuel-saving driving rating result of the driver which is output from the fuel-saving driving rating unit 14, and a fuel-saving driving advice to the driver which is output from the fuel-saving driving advice generating unit 15. The output interface unit 11 outputs the results and advice to the speaker 16.

The in-vehicle network interface unit 12 is an interface that controls communication of various pieces of information conducted between the fuel-saving driving diagnostic apparatus 10 and the driving control device 20 which is mentioned later. For example, the in-vehicle network interface unit 12 receives various requests (such as speed obtaining request and a number-of-engine-revolutions obtaining request) output from the fuel-saving driving diagnostic apparatus 10 to output the various requests to the driving control device 20, and the in-vehicle network interface unit 12 receives various replies (such as speed information and number-of-engine-revolutions information) output from the driving control device 20 to output the various replies to the fuel-saving driving diagnostic apparatus 10.

The fuel-saving driving diagnosing unit 13 is a control unit that diagnoses the fuel-saving driving of the driver of the vehicle. As to functions closely associated with the invention, the fuel-saving driving diagnosing unit 13 includes a memory 13a, a stop detection unit 13b, an idling stop detection unit 13c, an idling parking determination unit 13d, an idling parking time counting unit 13e, an idling parking frequency counting unit 13f, an average idling parking time computing unit 13g, and an idling-left determination unit 13h.

Various pieces of information produced by the function units (the stop detection unit 13b to the idling-left determination unit 13h) included in the fuel-saving driving diagnosing unit 13 are stored in the memory 13a. As to pieces of information closely associated with the invention, an idling stop state determination condition for determining whether the vehicle is in an idling stop state, an idling parking state determination condition for determining whether the vehicle is in an idling parking state, and an idling-left state determination condition for determining whether the vehicle maintains the idling state are stored in the memory 13a.

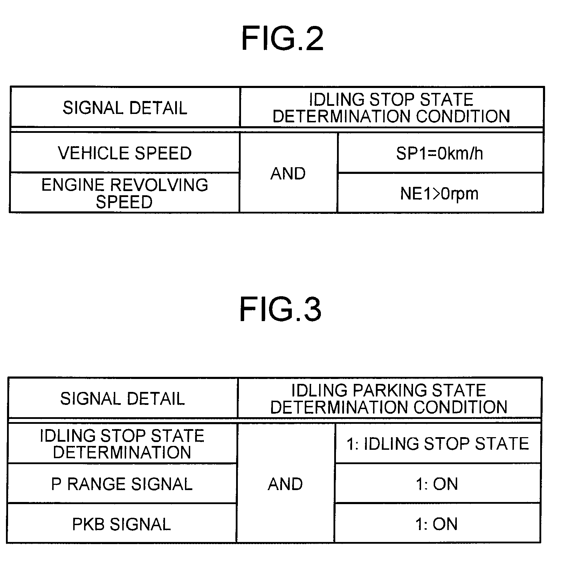

For example, as illustrated in FIG. 2, ""SP1 (vehicle speed) ≥0 km/h" AND "NE1 (number of engine revolutions) >0 rpm"" is stored as the idling stop state determination condition in the memory 13a using a "vehicle speed" indicating a speed of the vehicle and a "number of engine revolutions" indicating the number of revolutions of the engine of the vehicle. FIG. 2 is a table illustrating the idling stop state determination condition.

For example, as illustrated in FIG. 3, the ""idling stop state" AND "P range signal is ON" AND "PKB signal is ON"" is stored as the idling parking state determination condition in the memory 13a using "idling stop state determination" indicating whether the vehicle is in the idling stop state, a "P range signal" indicating whether the selection lever of the vehicle is located in the P range, and a "PKB signal" indicating whether the parking brake of the vehicle is located in the ON position. The idling parking state determination condition can arbitrarily be set. For example, the idling parking state determination condition can alternatively be set to "the "idling stop state" AND "P range signal is ON" OR "PKB signal is ON"". FIG. 3 is a table illustrating the idling parking state determination condition.

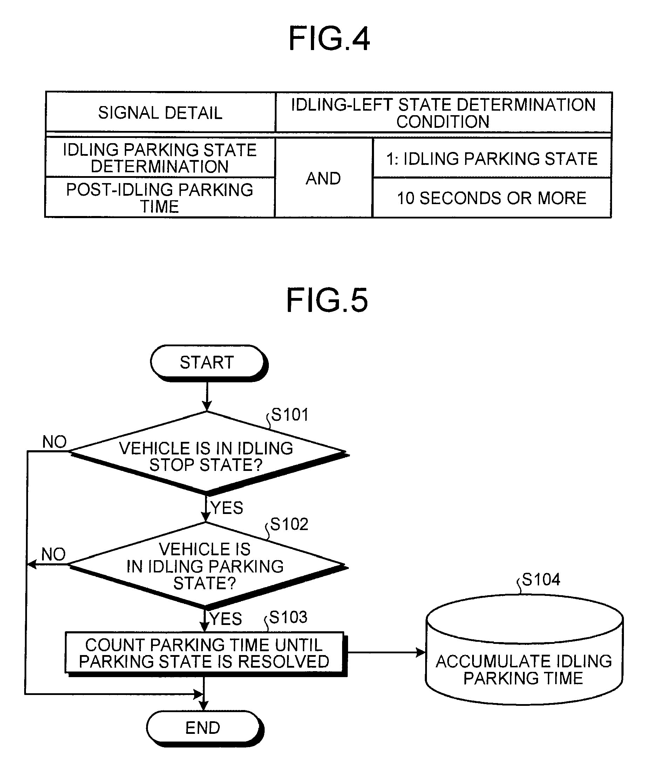

For example, as illustrated in FIG. 4, "the "idling parking state" AND "post-idling parking time≥10 sec"" is stored as the idling-left state determination condition in the memory 13a using ""idling parking state determination" indicating whether the vehicle is in the idling parking state and a "post-idling parking time" indicating an elapsed time for which idling parking is maintained". The post-idling parking time is described only by way of example, and should not be taken as limiting. FIG. 4 is a view illustrating an idling-left state determination condition.

The stop detection unit 13b detects that the vehicle stops based on the vehicle speed indicating the speed of the vehicle. Specifically, the stop detection unit 13b detects that the vehicle stops when vehicle speed information obtained from the driving control device 20 is "vehicle speed=0 km". The stop detection unit 13b notifies the idling stop detection unit 13c that the vehicle stops.

The idling stop detection unit 13c detects that the vehicle is in the idling state, i.e., the state in which the vehicle is idled, when the number of engine revolutions of the vehicle whose stop is detected by the stop detection unit 13b is a predetermined threshold or more. Specifically, after the stop detection unit 13b notifies the idling stop detection unit 13c that the vehicle stops, the idling stop detection unit 13c determines whether the vehicle is in the idling state while referring to the idling stop state determination condition stored in the memory 13a. For example, the idling stop detection unit 13c which is notified that the vehicle stops obtains the "vehicle speed" and the "number of engine revolutions" through the driving control device 20. The idling stop detection unit 13c determines that the vehicle is in the idling stop state, when an event satisfying the idling stop state determination condition stored in the memory 13a is generated, that is, when "the obtained vehicle speed is "0 km/h or more" while the obtained number of engine revolutions is "more than 0 rpm"". When determining that the vehicle is in the idling stop state, the idling stop detection unit 13c notifies the idling parking determination unit 13d that the vehicle is in the idling stop state.

The idling parking determination unit 13d determines whether the vehicle in the idling state is in a parking state based on the selection lever and/or the parking brake of the vehicle in the idling state, which is detected by the idling stop detection unit 13c. Specifically, the idling parking determination unit 13d determines whether the vehicle is parked in the idling state while referring to the idling parking state determination condition stored in the memory 13a, when the idling stop detection unit 13c determines that the vehicle is in the idling stop state. When determining that the vehicle is parked in the idling state, the idling parking determination unit 13d notifies the idling-left determination unit 13h that the vehicle is in the idling parking state.

For example, after the idling stop detection unit 13c notifies the idling parking determination unit 13d that the vehicle is in the idling stop state, the idling parking determination unit 13d determines whether the vehicle is parked in the idling state while referring to the idling parking state determination condition stored in the memory 13a. That is, the idling parking determination unit 13d notified that the vehicle stops in the idling state obtains the "P range signal" and the "PKB signal" through the driving control device 20. The idling parking determination unit 13d determines that the vehicle is parked in the idling state, when an event satisfying the idling parking state determination condition stored in the memory 13a is generated, that is, when ""the vehicle is in the idling stop state" when the obtained P range signal becomes an "ON" state, and when the obtained PKB signal becomes the "ON" state".

The idling parking time counting unit 13e counts an idling parking time that is an elapsed time for which the parking state of the vehicle determined by the idling parking determination unit 13d is maintained. Specifically, the idling parking time counting unit 13e counts the time until the vehicle gets out of the idling stop state since the idling parking determination unit 13d determines that the vehicle is in the idling parking state, and the idling parking time counting unit 13e stores the counted time in the memory 13a.

The idling parking frequency counting unit 13f counts an idling parking frequency that is a frequency at which the vehicle in the idling state becomes the parking state. Specifically, the idling parking frequency counting unit 13f performs the counting as the idling parking frequency every time the idling parking determination unit 13d determines that the vehicle is in the idling stop state, and the idling parking frequency counting unit 13f stores the idling parking frequency in the memory 13a.

The average idling parking time computing unit 13g computes an average idling parking time indicating a time, for which the vehicle in the idling state maintains the idling state in one-time stop state, based on the idling parking frequency counted by the idling parking frequency counting unit 13f and the idling parking time counted by the idling parking time counting unit 13e. Specifically, the average idling parking time computing unit 13g obtains the frequency of the parking state, stored by the idling parking frequency counting unit 13f, and the elapsed time for which the parking state is maintained, stored by the idling parking time counting unit 13e, from the memory 13a. Then, the average idling parking time computing unit 13g computes the average idling parking time from "elapsed time/parking frequency" and stores the computed average idling parking time in the memory 13a.

For example, when the frequency of the parking state obtained from the memory 13a is "10", and when the elapsed time for which the parking state is maintained is "0.3 hour", the average idling parking time computing unit 13g computes the average idling parking time of "0.3". The fuel-saving driving rating unit 14 stores the computed average idling parking time of "0.3" in the memory 13a.

When a predetermined time elapses since the idling parking determination unit 13d determines that the vehicle in the idling state is in the parking state, the idling-left determination unit 13h determines that the vehicle is in an idling-left state, i.e., a state in which the vehicle is left in the idling state, and the idling-left determination unit 13h notifies the driver of advice on fuel-saving driving. For example, after the idling parking determination unit 13d determines that the vehicle in the idling state is in the parking state, the idling-left determination unit 13h determines whether the vehicle is left in the idling state while referring to the idling-left state determination condition stored in the memory 13a.

That is, the idling-left determination unit 13h which is notified that the vehicle in the idling state is in the parking state obtains the "time (elapsed time) for which the vehicle is parked in the idling state" counted and stored in the memory 13a by the idling parking time counting unit 13e. When an event satisfying the idling-left state determination condition stored in the memory 13a, that is, when ""the vehicle is in the idling parking state" and the obtained elapsed time is "10 seconds or more"", the idling-left determination unit 13h determines that the vehicle is left in the idling state. When determining that the vehicle is left in the idling state, the idling-left determination unit 13h immediately notifies the driver of the advice that "The vehicle is in the idling-left state. Stop the engine at once." through the speaker 16.

The fuel-saving driving rating unit 14 scores fuel-saving driving of the driver based on the average idling parking time computed by the average idling parking time computing unit 13g, and notifies the driver of the advice on the fuel-saving driving based on the rating result. Specifically, the fuel-saving driving rating unit 14 obtains the average idling parking time computed and stored in the memory 13a by the average idling parking time computing unit 13g, and multiplies the average idling parking time by 100, which allows the fuel-saving driving of the driver to be scored. In the above-described example, the fuel-saving driving rating unit 14 scores the fuel-saving driving of the driver as "30" points by multiplying the average idling parking time of "0.3" by 100 and stores the score of "30" points in the memory 13a. The score becomes higher as the idling time increases, because the rating is based on a computed average idling time. When the score is higher, it is determined that the driver does not perform the fuel-saving driving.

The fuel-saving driving rating unit 14 can also score the fuel-saving driving of the driver based on "the time (elapsed time) for which the vehicle is parked in the idling state" counted by the idling parking time counting unit 13e. For example, when the "time for which the vehicle is parked in the idling state" counted and stored in the memory 13a by the idling parking time counting unit 13e is "a predetermined threshold (for example, 1 minute) or more", the fuel-saving driving rating unit 14 can give the rating "lot of wasteful consumption" to the fuel-saving driving of the driver. For example, when the "time for which the vehicle is parked in the idling state" is "lower than a predetermined threshold (for example, 1 minute)", the fuel-saving driving rating unit 14 can give the rating "little wasteful consumption" to the fuel-saving driving of the driver.

The fuel-saving driving advice generating unit 15 notifies the driver of the advice on the fuel-saving driving based on the result computed (diagnosed) by the fuel-saving driving rating unit 14. Specifically, for example, the fuel-saving driving advice generating unit 15 obtains the average idling parking time and rating result, stored in the memory 13a, and generates a message according to the average idling parking time or rating result to notify the driver of the message. For example, when the average idling parking time is "0.2 hour", the fuel-saving driving advice generating unit 15 generates a message "Mind idling parking" to notify the driver of the advice on the fuel-saving driving. When the rating result is "70 points", the fuel-saving driving advice generating unit 15 generates a message "Excessive idling parking. Try ecologically-friendly driving" to notify the driver of the advice on the fuel-saving driving through the speaker 16.

As to the technique in which the fuel-saving driving advice generating unit 15 generates the message, the message can be generated with the use of a format corresponding to the average idling time or rating result, and "message A" or "message B" may be selected by comparing the average idling time or rating result with a threshold. For example, a format that "Excessive idling parking - XX points. Try ecologically-friendly driving." may be stored in the memory 13a. As to the comparison with the threshold, for example, the "message A" may be stored in the memory 13a for the case where the rating result is lower than a threshold A, and a "message B" may be stored in the memory 13a for the case where the rating result is the threshold A or more. The fuel-saving driving advice generating unit 15 compares the result scored by the fuel-saving driving rating unit 14 and the threshold to select the message, and the fuel-saving driving advice generating unit 15 notifies the driver of the message.

### (Configurations of Driving control device 20 and Various Devices)

The driving control device 20 that performs various kinds of control relating to the driving of the vehicle and devices connected to the driving control device 20 will be described below. The devices connected to the driving control device 20 include the engine control device 21, the brake control device 22, the vehicle speed sensor 23, the accelerator operation quantity sensor 24, the shift sensor 25 and the vehicle speed pulse signal added-up value storing unit 26.

The driving control device 20 obtains various pieces of information from the connected devices to output the various pieces of information to the fuel-saving driving diagnostic apparatus 10. Various events may trigger the acquisition and output of the various pieces of information by the driving control device 20 to the fuel-saving driving diagnostic apparatus 10: for example, the driving control device 20 obtains the various pieces of information to notify the fuel-saving driving diagnostic apparatus 10 when receiving a request from the fuel-saving driving diagnostic apparatus 10; the driving control device 20 periodically obtains the various pieces of information to notify the fuel-saving driving diagnostic apparatus 10; or the driving control device 20 obtains the various pieces of information to notify the fuel-saving driving diagnostic apparatus 10 when a predetermined event occurs (for example, when the vehicle speed becomes 0). Examples of the information that is obtained and output to the fuel-saving driving diagnostic apparatus 10 by the driving control device 20 include a vehicle speed, a number of engine revolutions, a selection lever signal, and an accelerator operation quantity (accelerator opening ratio).

The driving control device 20 obtains various pieces of information from the engine control device 21, the brake control device 22, the vehicle speed sensor 23, the accelerator operation quantity sensor 24, the shift sensor 25, and the vehicle speed pulse signal added-up value storing unit 26 to control the driving of the vehicle. For example, when obtaining the increased accelerator opening ratio from the accelerator operation quantity sensor 24, the driving control device 20 controls the engine control device 21 so as to increase the number of engine revolutions.

The engine control device 21 controls a gasoline engine that drives the vehicle. Specifically, the engine control device 21 receives a request to increase the number of engine revolutions or a request to decrease the number of engine revolutions from the driving control device 20, and the engine control device 21 controls the number of engine revolutions according to the request. Further, the engine control device 21 outputs the currently-controlled number of engine revolutions to the driving control device 20 when a certain event occurs as described in connection with the driving control device 20 above.

The brake control device 22 is connected to a brake pedal (not illustrated) of the vehicle, and controls a mechanical brake according to a brake manipulation of the driver. At the same time, the brake control device 22 controls the brake so as to use it as a regeneration brake according to a shift lever manipulation of the driver. The vehicle speed sensor 23 senses the current vehicle speed of the vehicle. Specifically, the vehicle speed sensor 23 senses the current vehicle speed displayed on a speed meter and the like, and the vehicle speed sensor 23 outputs the sensed vehicle speed to the driving control device 20 when a certain event occurs as described in connection with the driving control device 20 above.

The accelerator operation quantity sensor 24 senses the current accelerator operation quantity of the driver. Specifically, the accelerator operation quantity sensor 24 is connected to an accelerator pedal (not illustrated) of the vehicle, senses the accelerator operation quantity according to an accelerator manipulation of the driver, and outputs the sensed accelerator operation quantity to the driving control device 20 when a certain event occurs as described in connection with the driving control device 20 above.

The shift sensor 25 senses a position of the shift lever (selection lever) of the vehicle. Specifically, the shift sensor 25 is connected to the shift lever (not illustrated) of the vehicle, senses the shift lever according to a shift lever manipulation of the driver, and outputs the range signal indicating the sensed shift lever to the driving control device 20 when a certain event occurs as described in connection with the driving control device 20 above.

A vehicle speed pulse signal added-up value is stored in the vehicle speed pulse signal added-up value storing unit 26. The vehicle speed pulse signal added-up value is a value obtained by incrementing the value by one every time the pulse sensor detects a vehicle-speed pulse signal which is output every time the wheel rotates once. The pulse sensor is provided to an inner diameter of the wheel of the vehicle. In other words, the vehicle speed pulse signal added-up value is a value obtained by adding up the number of rotations of the wheel. By computing the vehicle speed pulse signal added-up value corresponding to a predetermined time period and multiplying the computed value by an outer circumferential length of the wheel, the traveling distance of the vehicle during the predetermined time period can be computed. The vehicle speed pulse signal added-up value storing unit 26 outputs the computed traveling distance of the vehicle to the driving control device 20 when a certain event occurs as described in connection with the driving control device 20 above.

### [Pieces of Processing by Fuel-saving Driving Diagnostic Apparatus]

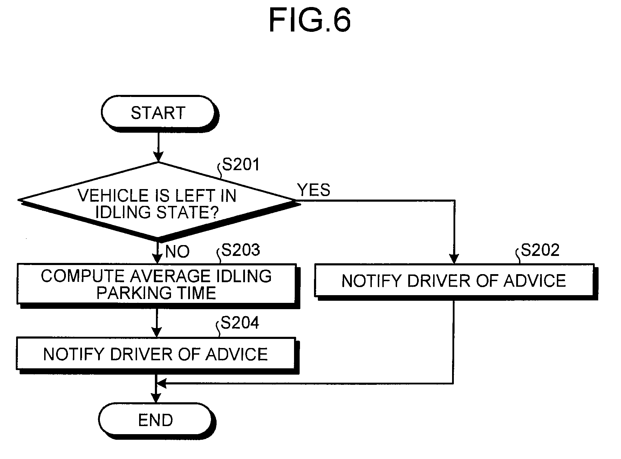

Pieces of processing performed by the fuel-saving driving diagnostic apparatus of the first embodiment will be described below with reference to FIG. 5 and FIG. 6. FIG. 5 is a flowchart illustrating a flow of idling parking determination process in the fuel-saving driving diagnostic apparatus of the first embodiment. FIG. 6 is a flowchart illustrating a flow of idling-left determination process in the fuel-saving driving diagnostic apparatus of the first embodiment.

### (Flow of Idling Parking Determination Process)

The flow of the idling parking determination process in the fuel-saving driving diagnostic apparatus of the first embodiment will be described with reference to FIG. 5. As illustrated in FIG. 5, the fuel-saving driving diagnostic apparatus 10 determines whether the vehicle determined to be in the idling stop state is in the idling parking state while referring to the idling parking state determination condition stored in the memory 13a (YES in Step S101 and Step S102).

When determining that the vehicle determined to be in the idling stop state is in the idling parking state (YES in Step S102), the fuel-saving driving diagnostic apparatus 10 refers to the idling parking state determination condition stored in the memory 13a, counts the parking time until the vehicle gets out of the parking state, and stores the parking time in the memory 13a (Step S103 and Step S104).

On the other hand, the fuel-saving driving diagnostic apparatus 10 ends the idling parking determination process when determining that the vehicle is not in the idling stop state (NO in Step S101) or when determining that the vehicle is not in the idling parking state (NO in Step S102).

### (Flow of Idling-left determination Process)

The flow of the idling-left determination process in the fuel-saving driving diagnostic apparatus of the first embodiment will be described with reference to FIG. 6. As illustrated in FIG. 6, when determining that the vehicle is in the idling parking state, the fuel-saving driving diagnostic apparatus 10 determines whether the vehicle is left in the idling state while referring to the idling-left state determination condition stored in the memory 13a (Step S201).

When determining that the vehicle is left in the idling state (YES in Step S201), the fuel-saving driving diagnostic apparatus 10 immediately notifies the driver of a message to encourage the ecologically-friendly driving (fuel-saving driving) (Step S202).

On the other hand, when determining that the vehicle is not left in the idling state (NO in Step S201), the fuel-saving driving diagnostic apparatus 10 computes the average idling parking time at a predetermined timing (Step S203), and notifies the driver of a advice based on the computed result (Step S204). The timing of computing of the average idling parking time can be any timing. For example, the computing can be performed when the driver returns home and parks the vehicle, or when the driver performs the instruction manipulation.

### [Effect of First Embodiment]

As described above, according to the first embodiment, the fuel-saving driving diagnostic apparatus 10 detects that the vehicle stops, and detects that the vehicle is in the idling state, which is a state of the idling vehicle, when detected number of engine revolutions of the vehicle is the predetermined threshold or more. The fuel-saving driving diagnostic apparatus 10 determines whether the vehicle in the idling state is in the parking state based on the selection lever or parking brake of the vehicle detected to be in the idling state. After counting the idling parking time that is of the elapsed time for which the determined parking state of the vehicle is maintained, the fuel-saving driving diagnostic apparatus 10 diagnoses the fuel-saving driving based on the counted idling parking time. As a result, the fuel-saving driving diagnostic apparatus 10 determines that only the parking vehicle whose driver has no intention to drive is in the idling state, so that the idling state can precisely be determined.

According to the first embodiment, the fuel-saving driving diagnostic apparatus 10 counts the frequency at which the vehicle in the idling state becomes the parking state and the elapsed time for which the vehicle in the idling state maintains the parking state, and computes the average idling parking time, i.e., the time for which the vehicle in the idling state maintains the idling state in the one-time stop state based on the counted frequency of the parking state and the elapsed time for which the parking state is maintained. As a result, the fuel-saving driving diagnostic apparatus 10 computes the easy-to-understand average idling time for the driver, which allows to encourage the driver to perform the fuel-saving driving.

According to the first embodiment, the fuel-saving driving diagnostic apparatus 10 notifies the driver of the advice on the fuel-saving driving based on the average idling parking time. Hence, it is possible to encourage the driver more strongly to perform the fuel-saving driving.

According to the first embodiment, the fuel-saving driving diagnostic apparatus 10 scores the fuel-saving driving of the driver based on the average idling parking time, and notifies the driver of the advice on the fuel-saving driving based on the rating result. As a result, the fuel-saving driving diagnostic apparatus 10 can notify the driver of the easy-to-understand information. Hence, it is possible to encourage the driver more strongly to perform the fuel-saving driving.

According to the first embodiment, when the predetermined time elapses since the vehicle in the idling state is determined to be in the parking state, the fuel-saving driving diagnostic apparatus 10 determines that the vehicle is in the idling-left state, i.e., the state in which the vehicle is left in the idling state, and notifies the driver of the advice on the fuel-saving driving. As a result, the fuel-saving driving diagnostic apparatus 10 can immediately notify the driver who performs the wasteful idling, that is, the driver who emits the gas wastefully, of the advice on the fuel-saving driving.

### Second Embodiment

Although the first embodiment of the invention is described above, various modifications of the invention can be made in addition to the first embodiment. Therefore, different embodiments of the invention will be described below under the headings of (1) an advice generating technique, (2) improvement of accuracy of stop state, (3) improvement of accuracy of score, (4) a functional configuration, (5) a system configuration and others and (6) a program.

### (1) Advice Generating Technique

In the first embodiment, the advice given to the driver is in the form of sound conveyed through the speaker 16. The invention is not limited to the first embodiment. The advice can be produced in the form of image data to be output and displayed on the car navigation device 17 or a head-up display (not illustrated).

### (2) Improvement of Accuracy of Stop State

The fuel-saving driving diagnostic apparatus 10 disclosed in the present application may be designed to sense whether the vehicle stops based on the vehicle speed, when the vehicle is neither waiting at stoplights nor waiting at the railroad crossing nor being caught in the traffic jam. Specifically, the fuel-saving driving diagnostic apparatus 10 may perform determination on stopped state when the vehicle is waiting at stoplights or at the railroad crossing or being caught in the traffic jam, by obtaining map information or traveling information from the car navigation device 17. Therefore, the determination on stopped state of the vehicle can be made more precisely.

### (3) Improvement of Accuracy of Score

The fuel-saving driving diagnostic apparatus 10 may count the elapsed time for which the vehicle in the idling state maintains the parking state only when a person other than the driver does not exist in the vehicle, or when an engine water temperature of the vehicle is higher than a predetermined threshold, or when a temperature in the vehicle is lower than a predetermined threshold. Specifically, the fuel-saving driving diagnostic apparatus 10 obtains information about "whether a person other than the driver exists in the vehicle", the "engine water temperature", and the "temperature in the vehicle" from a human sensor attached to a seat or the driving control device 20. The fuel-saving driving diagnostic apparatus 10 can exclude the time for which the obtained information satisfies one of the conditions from the elapsed time for which the vehicle in the idling state maintains the parking state. Therefore, the fuel-saving driving diagnostic apparatus 10 can count only the truly unnecessary idling state, and the idling state can be determined more precisely.

### (4) Functional Configuration

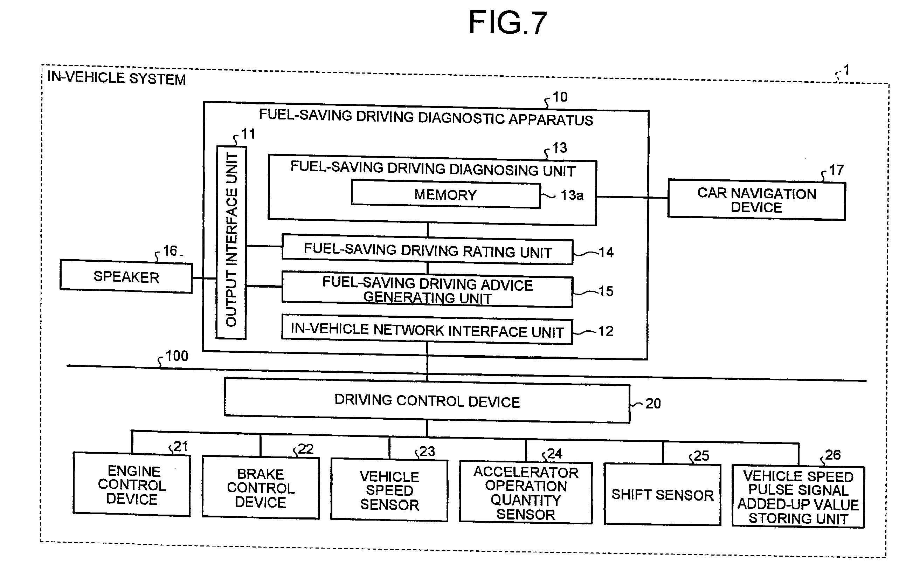

In the first embodiment, the fuel-saving driving diagnosing unit 13 includes the memory 13a, the stop detection unit 13b, the idling stop detection unit 13c, the idling parking determination unit 13d, the idling parking time counting unit 13e, the idling parking frequency counting unit 13f, the average idling parking time computing unit 13g, and the idling-left determination unit 13h. However, the invention is not limited by the fuel-saving driving diagnosing unit 13 of the first embodiment. It is not always necessary that the fuel-saving driving diagnosing unit 13 have all the above functions. For example, as illustrated in FIG. 7, even if the fuel-saving driving diagnosing unit 13 includes only the memory 13a while the driving control device 20 includes the functional units other than the memory 13a, the idling state can precisely be determined with respect to the individual driver. Even if the memory 13a is not included, each functional unit can include a temporary memory region to perform the processing. FIG. 7 is a view illustrating an example of the in-vehicle system in which the fuel-saving driving diagnostic function is distributed.

The functions can be divided between the fuel-saving driving diagnosing unit 13 and the driving control device 20. For example, the memory 13a and the stop detection unit 13b can be provided in the fuel-saving driving diagnosing unit 13 while the idling stop detection unit 13c, the idling parking determination unit 13d, the idling parking time counting unit 13e, the idling parking frequency counting unit 13f, the average idling parking time computing unit 13g and the idling-left determination unit 13h are provided in the driving control device 20. In the in-vehicle system 1, it is not always necessary that the fuel-saving driving diagnosing unit 13 and the driving control device 20 be separately provided each other, as illustrated in FIG. 1. For example, the driving control device 20 may be incorporated in the fuel-saving driving diagnosing unit 13.

### (5) System Configuration and Others

In the pieces of processing performed in the present embodiment, the whole or part of the processing described as to be automatically performed can manually be performed. Additionally, pieces of information (for example, FIG. 2 to FIG. 4) on the processing step, control step, specific name, various pieces of data, and parameter, which are described above or illustrated in the drawings, can arbitrarily changed unless otherwise specified.

Each constituent element of each illustrated device is functionally conceptual, and it is not always necessary that the constituent element be physically configured as illustrated in the drawing. That is, the specific mode of the distribution and integration of the devices is not limited to that of the drawings, the whole or part of the devices can functionally or physically be distributed or integrated in an arbitrary unit according to various loads and usage states (for example, the stop detection unit 13b and the idling stop detection unit 13c may be integrated). Further, each processing function performed by each device may wholly or partially be realized by a CPU and a program analyzed and executed by the CPU, or the processing function may wholly or partially be realized as hardware formed with wired logic.

### (6) Program

The fuel-saving driving diagnostic method of the present embodiment can be realized by executing a previously prepared program with a computer such as a personal computer and a workstation. The program can be distributed through a network such as the Internet. The program is recorded in a computer-readable recording medium such as a hard disk, a Flexible Disk (FD), a CD-ROM, a MO, and a DVD, and the program is read from the recording medium by the computer, which allows the program to be executed by the computer.

### Industrial Applicability

As described above, the fuel-saving driving diagnostic apparatus, the in-vehicle system, the driving control device, and the fuel-saving driving diagnostic program according to the invention are useful for diagnosis of the fuel-saving driving of a driver of the vehicle, and are particularly suitable for the precise determination of the idling state.

### Reference Signs List

- 1: IN-VEHICLE SYSTEM
- 10: FUEL-SAVING DRIVING DIAGNOSTIC APPARATUS
- 11: OUTPUT INTERFACE UNIT
- 12: IN-VEHICLE NETWORK INTERFACE UNIT
- 13: FUEL-SAVING DRIVING DIAGNOSING UNIT
- 13a: MEMORY
- 13b: STOP DETECTION UNIT
- 13c: IDLING STOP DETECTION UNIT
- 13d: IDLING PARKING DETERMINATION UNIT
- 13e: IDLING PARKING TIME COUNTING UNIT
- 13f: IDLING PARKING FREQUENCY COUNTING UNIT
- 13g: AVERAGE IDLING PARKING TIME COMPUTING UNIT
- 13h: IDLING-LEFT DETERMINATION UNIT
- 14: FUEL-SAVING DRIVING RATING UNIT
- 15: FUEL-SAVING DRIVING ADVICE GENERATING UNIT
- 16: SPEAKER
- 17: CAR NAVIGATION DEVICE
- 20: DRIVING CONTROL DEVICE
- 21: ENGINE CONTROL DEVICE
- 22: BRAKE CONTROL DEVICE
- 23: VEHICLE SPEED SENSOR
- 24: ACCELERATOR OPERATION QUANTITY SENSOR
- 25: SHIFT SENSOR
- 26: VEHICLE SPEED PULSE SIGNAL ADDED-UP VALUE STORING UNIT
- 100: BUS

## Claims

1. A fuel-saving driving diagnostic apparatus comprising:
a stop detection unit that detects that a vehicle stops;
an idling stop detection unit that detects that the vehicle is in an idling state, which is a state in which the vehicle is idled, when a number of engine revolutions of the vehicle detected by the stop detection unit is a predetermined threshold or more;
an idling parking determination unit that determines whether the vehicle in the idling state is in a parking state based on a selection lever or a parking brake of the vehicle in the idling state detected by the idling stop detection unit; and
an idling parking time counting unit that counts an idling parking time that is an elapsed time for which the parking state of the vehicle determined by the idling parking determination unit is maintained,
wherein fuel-saving driving is diagnosed based on the idling parking time counted by the idling parking time counting unit.

2. The fuel-saving driving diagnostic apparatus according to claim 1, wherein the stop detection unit detects that the vehicle stops, when the vehicle is neither waiting at stoplights nor waiting at railroad crossing nor being caught in traffic jam.

3. The fuel-saving driving diagnostic apparatus according to claim 1, further comprising:
an idling parking frequency counting unit that counts an idling parking frequency that is of a frequency at which the vehicle in the idling state is in a parking state; and
an average idling parking time computing unit that computes an average idling parking time, which is a time for which the vehicle in the idling state maintains the idling state in one-time stop state, based on the idling parking frequency counted by the idling parking frequency counting unit and the idling parking time counted by the idling parking time counting unit.

4. The fuel-saving driving diagnostic apparatus according to claim 3, wherein the fuel-saving driving diagnostic apparatus counts an elapsed time for which the vehicle in the idling state maintains the parking state, if a person other than a driver is not present in the vehicle, an engine water temperature of the vehicle is higher than a predetermined threshold, and a temperature in the vehicle is lower than predetermined threshold.

5. The fuel-saving driving diagnostic apparatus according to claim 3, further comprising an advice notification unit that notifies the driver of advice on fuel-saving driving based on the average idling parking time computed by the average idling parking time computing unit.

6. The fuel-saving driving diagnostic apparatus according to claim 3, further comprising an advice notification unit that rates fuel-saving driving of the driver based on the average idling parking time computed by the average idling parking time computing unit and notifies the driver of advice on the fuel-saving driving based on the rating result.

7. The fuel-saving driving diagnostic apparatus according to claim 1, wherein when a predetermined time elapses after the vehicle in the idling state is determined to be in the parking state by the idling parking determination unit, the vehicle is determined to be in an idling-left state, which is a state being left in an idling state, and the driver is notified of advice on the fuel-saving driving.

8. An in-vehicle system including a driving control device that performs various kinds of control relating to driving of a vehicle, and a fuel-saving driving diagnostic apparatus that makes diagnosis of the fuel-saving driving of a driver of the vehicle, the in-vehicle system comprising:
a stop detection unit that detects that the vehicle stops;
an idling stop detection unit that detects that the vehicle is in an idling state, which is a state in which the vehicle is idled, when a number of engine revolutions of the vehicle detected by the stop detection unit is a predetermined threshold or more;
an idling parking determination unit that determines whether the vehicle in the idling state is in a parking state based on a selection lever or a parking brake of the vehicle in the idling state detected by the idling stop detection unit; and
an idling parking time counting unit that counts an idling parking time that is of an elapsed time for which the parking state of the vehicle determined by the idling parking determination unit is maintained,
wherein the fuel-saving driving is diagnosed based on the idling parking time counted by the idling parking time counting unit.

9. A driving control device in an in-vehicle system which includes the driving control device that performs various kinds of control relating to driving of a vehicle, and a fuel-saving driving diagnostic apparatus that makes diagnosis of the fuel-saving driving of a driver of the vehicle, the driving control device comprising:
a stop detection unit that detects that the vehicle stops;
an idling stop detection unit that detects that the vehicle is in an idling state, which is a state in which the vehicle is idled, when a number of engine revolutions of the vehicle detected by the stop detection unit is a predetermined threshold or more;
an idling parking determination unit that determines whether the vehicle in the idling state is in a parking state based on a selection lever or a parking brake of the vehicle in the idling state detected by the idling stop detection unit; and
an idling parking time counting unit that counts an idling parking time that is of an elapsed time for which the parking state of the vehicle determined by the idling parking determination unit is maintained,
wherein the fuel-saving driving is diagnosed based on the idling parking time counted by the idling parking time counting unit.

10. A fuel-saving driving diagnostic program that causes a computer to execute a process to diagnose fuel-saving driving of a driver of a vehicle, the process comprising:
a stop detection step of detecting that the vehicle stops;
an idling stop detection step of detecting that the vehicle is in an idling state, which is a state in which the vehicle is idled, when a number of engine revolutions of the vehicle detected through the stop detection step is a predetermined threshold or more;
an idling parking determination step of determining whether the vehicle in the idling state is in a parking state based on a selection lever or a parking brake of the vehicle in the idling state detected through the idling stop detection step; and
an idling parking time counting step of counting an idling parking time that is of an elapsed time for which the parking state of the vehicle determined through the idling parking determination step is maintained,
wherein fuel-saving driving is diagnosed based on the idling parking time counted through the idling parking time counting step.
